# EUROPEAN PATENT APPLICATION

(11) **EP 4 541 705 A1**
(43) Date of publication of application: **23.04.2025**
(21) Application number: 24206435.0
(22) Date of filing: 14.10.2024
(51) Int. Cl.: B62K 21/08, B62J 45/411, B62J 45/413, B62D 5/04, B62D 6/00, B62D 6/02

(54) **STRADDLED VEHICLE**

(30) Priority: 18.10.2023 JP 2023179605
(71) Applicant: Yamaha Hatsudoki Kabushiki Kaisha, Iwata-shi, Shizuoka 438-8501 (JP)
(72) Inventor: KONNO, Toshihiko, Iwata-shi, 4388501 (JP)
(74) Representative: Studio Torta S.p.A.

(57) **Abstract**

There is disclosed a straddled vehicle (1) including a vehicle body frame (60), a steering device (19), a front wheel (3), a steering angular velocity detection unit (82), a restriction device (32), and a restriction control unit (83) wherein the steering device (19) is rotatably supported by the vehicle body frame (60); the front wheel (3) being steered by the steering device (19); when the front wheel (3) is steered by the steering device (19), the steering angle of the front wheel (3) changing; the steering angular velocity detection unit (82) detecting the steering angular velocity of the front wheel (3); the restriction device (32) restricting a change in the steering angle of the front wheel (3); the restriction control unit (83) controlling the restriction device (32) on the basis of a result detected by the steering angular velocity detection unit (82).

## Description

### Technical Field

The present invention relates to a straddled vehicle.

### Prior Art

A straddled vehicle described in JP 2013-60187 A includes a steering angle sensor, an actuator, and a control device. The steering angle sensor detects a steering angle. The actuator generates steering torque. On the basis of a result detected by the steering angle sensor, the control device controls the steering torque generated by the actuator.

### JP 2013-60187 A

In a conventional straddled vehicle, a control device controls steering torque on the basis of a steering angle. Therefore, it may be difficult to appropriately maintain a posture of the straddled vehicle.

### Description of the invention

The present invention has been made in view of such circumstances, and an object of the present invention is to provide control of a straddled vehicle advantageous for achieving an appropriate posture in a straddled vehicle.

In order to solve the above-described problem, the present invention has the following configurations.

That is, the present invention is a straddled vehicle including
a vehicle body frame,
a steering device rotatably supported by the vehicle body frame,
a front wheel that is steered by the steering device and changes a steering angle of the steering device,
a first detection unit that detects at least any one of steering angular velocity of the front wheel, acceleration of a steering angle of the front wheel, and steering torque of the front wheel,
a restriction unit that is able to restrict a change in the steering angle of the front wheel, and
a control unit that causes the restriction unit to restrict a change in the steering angle of the front wheel when a value detected by the first detection unit is equal to or greater than a predetermined value.

The straddled vehicle includes the vehicle body frame, the steering device, the front wheel, the first detection unit, the restriction unit, and the control unit. The steering device is rotatably supported by a vehicle body frame. The front wheel is steered by the steering device. When the front wheel is steered by the steering device, the steering angle of the front wheel changes. The first detection unit detects at least one of steering angular velocity of the front wheel, acceleration of a steering angle at the front wheel, or steering torque at the front wheel. The restriction unit restricts a change in the steering angle of the front wheel. The control unit controls the restriction unit on the basis of a result detected by the first detection unit.

Specifically, when a value detected by the first detection unit is equal to or greater than a predetermined value, the control unit causes the restriction unit to restrict the change in the steering angle of the front wheel. In other words, when the detected value reaches or exceeds the predetermined value, the restriction unit decreases the steering angular velocity. A period during which the detected value reaches or exceeds the predetermined value is not a long period. The period during which the detected value is equal to or greater than the predetermined value is short. Therefore, even if the detected value reaches or exceeds the predetermined value, it is advantageous for achieving an appropriate posture of the straddled vehicle.

In the above-described straddled vehicle,
when the value detected by the first detection unit is smaller than the predetermined value, the control unit preferably causes the restriction unit to allow a change in the steering angle of the front wheel.

In the above-described configuration, when the value detected by the first detection unit is smaller than the predetermined value, the control unit causes the restriction unit to allow the change in the steering angle of the front wheel. When the value detected by the first detection unit is smaller than the predetermined value, the control unit does not cause the restriction unit to restrict the change in the steering angle of the front wheel. With this configuration, a driver can operate the steering device at desired steering angular velocity.

In the above-described straddled vehicle,
the control unit preferably causes the restriction unit to allow a change in the steering angle of the front wheel when the straddled vehicle is traveling straight, and the value detected by the first detection unit is equal to or greater than the predetermined value, and
the control unit preferably causes the restriction unit to restrict a change in the steering angle of the front wheel when the straddled vehicle is turning on a curve, and the value detected by the first detection unit is equal to or greater than the predetermined value.

In the above-described configuration, when the straddled vehicle travels straight, a change in the steering angle of the front wheel is allowed. With this configuration, the driver can freely operate the steering device.

In the above-described straddled vehicle further including a speed detection unit that detects speed of the straddled vehicle,
the control unit preferably causes the restriction unit to restrict a change in the steering angle of the front wheel when the speed detected by the speed detection unit is high, and the value detected by the first detection unit is equal to or greater than the predetermined value, and
the control unit preferably causes the restriction unit to allow a change in the steering angle of the front wheel when the speed detected by the speed detection unit is low, and the value detected by the first detection unit is equal to or greater than the predetermined value.

In the above-described configuration, when the speed of the straddled vehicle (travel speed) is low, a change in the steering angle of the front wheel is allowed. With this configuration, the driver can freely operate the steering device.

In the above-described straddled vehicle,
the control unit preferably operates on assumption that speed of the straddled vehicle is high when the speed is 40 km/h.

In the above-described configuration, when the speed of the straddled vehicle (travel speed) is 40 km/h or less for example, a change in the steering angle of the front wheel is allowed. With this configuration, the driver can freely operate the steering device.

In the above-described straddled vehicle,
the predetermined value is preferably greater than an upper limit value of steering angular velocity of the front wheel with self-steering when the straddled vehicle turns on a curve,
the predetermined value is preferably greater than an upper limit value of acceleration of a steering angle of the front wheel with self-steering when the straddled vehicle turns on a curve, or
the predetermined value is preferably greater than an upper limit value of steering torque of the front wheel with self-steering when the straddled vehicle turns on a curve.

In the above-described configuration, the predetermined value is greater than the steering angular velocity of the front wheel with the self-steering, the acceleration of a steering angle at the front wheel with the self-steering, or the steering torque at the front wheel with the self-steering, the self-steering being generated when the straddled vehicle turns a curve. With this configuration, the change in the steering angle of the front wheel due to the self-steering is not affected by the control unit. The change in the steering angle of the front wheel due to the self-steering is not restricted.

In the above-described straddled vehicle,
the control unit preferably determines that the detected value is greater than the predetermined value
when a mean value of steering angular velocity of the front wheel during a predetermined period is equal to or greater than the predetermined value, when a mean value of acceleration of a steering angle of the front wheel during a predetermined period is equal to or greater than the predetermined value, or when a mean value of steering torque of the front wheel during a predetermined period is equal to or greater than the predetermined value, and
the predetermined period is preferably 0.2 seconds or less.

In the above-described configuration, in a case where the mean value of the steering angular velocity of the front wheel, the mean value of the acceleration of the steering angle of the front wheel, or the mean value of the steering torque of the front wheel is equal to or greater than the predetermined value during the predetermined period of 0.2 seconds or less, the control unit determines that the detected value is greater than the predetermined value, and restricts the change in the steering angle of the front wheel. With this configuration, it is advantageous for achieving a stable posture of the straddled vehicle even when an unexpected disturbance is input.

In the above-described straddled vehicle,
the first detection unit preferably detects rotation of the steering device with respect to the vehicle body frame.

According to the above-described configuration, the first detection unit detects the steering angular velocity of the front wheel or acceleration at the steering angle of the front wheel by detecting a relative rotation amount of the steering device with respect to the vehicle body frame. According to such a configuration, the steering angular velocity of the front wheel can be reliably detected.

In the above-described straddled vehicle,
the first detection unit is preferably a torque sensor that detects twist of the steering device.

According to the above-described configuration, the first detection unit is a torque sensor that detects twist of the steering device and detects steering torque of the front wheel. According to such a configuration, the first detection unit can be configured with a small number of components.

In the above-described straddled vehicle,
the steering device preferably includes
front forks that support a front wheel,
a shaft member coupled to the front forks,
a handlebar coupled to the shaft member, and
the torque sensor detects torque around the shaft member, the torque being applied to the shaft member.

According to the above-described configuration, the steering device includes the front forks, the shaft member, and the handlebar, and the torque sensor detects torque around the shaft member, the torque being applied to the shaft member. With this configuration, a change in a relative position between the front forks and the handlebar can be reliably detected by twist of the shaft member, and a torque input to the steering device can be reliably detected.

### (Claim 11: The restriction unit (EPS/damper) acts on the steering device)

In the above-described straddled vehicle,
the restriction unit preferably restricts rotation of the steering device with respect to the vehicle body frame.

According to the above-described configuration, the restriction unit restricts rotation of the steering device with respect to the vehicle body frame. With this configuration, it is easy for the restriction unit to restrict the change in the steering angle of the front wheel.

In the above-described straddled vehicle,
the restriction unit preferably includes
a braking mechanism that applies braking force for braking rotation of a steering device with respect to the vehicle body frame.

According to the above-described configuration, the restriction unit includes the braking mechanism. The braking mechanism applies braking force that brakes the rotation of the steering device with respect to the vehicle body frame. With this configuration, because the restriction unit can actively restrict the rotation of the steering device, it is possible to provide the straddled vehicle that can more reliably restrict the change in the steering angle of the front wheel.

In the above-described straddled vehicle,
the braking mechanism preferably includes
an actuator that generates braking force, and
a transmission mechanism that transmits the braking force from the actuator to a steering device.

According to the above-described configuration, the braking mechanism includes the actuator and the transmission mechanism that transmits the braking force of the actuator to the steering device. With this configuration, it is easy for the braking mechanism to apply the braking force to the steering device.

In the above-described straddled vehicle,
the restriction unit is preferably a steering damper that resists rotation of a steering device with respect to a vehicle body frame, and
the steering damper preferably includes
a cylinder tube,
a piston that moves by hydraulic pressure in the cylinder tube,
a main shaft integrated with the piston, in which at least a tip end of the main shaft protrudes from one end of the cylinder tube, and
a damping force adjustment unit that is able to, according to control by the control unit, adjust hydraulic pressure experienced by the piston.

According to the above-described configuration, the restriction unit is the steering damper. The steering damper includes the cylinder tube, the piston, the main shaft, and the damping force adjustment unit, and, according to control by the control unit, the damping force adjustment unit can adjust hydraulic pressure experienced by the piston. With this configuration, the restriction unit can be configured by using an existing component with high reliability.

In the above-described straddled vehicle,
the piston is preferably installed inside the cylinder tube,
the cylinder tube preferably includes a first chamber and a second chamber partitioned by the piston,
the first chamber preferably stores hydraulic oil,
the second chamber preferably stores hydraulic oil,
the steering damper preferably has a first path that communicates the first chamber and the second chamber,
the damping force adjustment unit preferably opens and closes the first path,
the damping force adjustment unit preferably closes the first path when the restriction unit restricts a change in the steering angle of the front wheel, and
the damping force adjustment unit preferably opens the first path when the restriction unit allows a change in the steering angle of the front wheel.

According to the configuration described above, the cylinder tube includes the first chamber and the second chamber that are partitioned by the piston, and the first chamber and the second chamber store the hydraulic oil. The first path communicates with the first chamber and the second chamber. The damping force adjustment unit opens and closes the first path. When the restriction unit restricts the change in the steering angle of the front wheel, the damping force adjustment unit closes the first path. When the restriction unit allows the change in the steering angle of the front wheel, the damping force adjustment unit opens the first path. With this configuration, the restriction unit can be configured by using an existing component with high reliability.

According to the above-described configuration, the change in the steering angle of the front wheel can be more reliably restricted by the restriction unit.

The straddled vehicle of the present invention is advantageous for achieving an appropriate posture.

### Brief description of the drawings

FIG. 1 is a plan view for describing an overall configuration of a two-wheel motor vehicle according to a first embodiment;
FIG. 2 is a left side view for describing a vehicle body frame according to the first embodiment;
FIG. 3 is a front view for describing a steering device according to the first embodiment;
FIG. 4 is a plan view for describing a top bridge according to the first embodiment;
FIG. 5 is a perspective view for describing the steering device according to the first embodiment;
FIG. 6 is a schematic view for describing operation of a restriction device according to the first embodiment;
FIG. 7 is a schematic view for describing operation of the restriction device according to the first embodiment;
FIG. 8 is a schematic view for describing operation of the restriction device according to the first embodiment;
FIG. 9 is a flowchart for describing operation of the restriction device according to the first embodiment;
FIGS. 10A and 10B are schematic views each for describing an effect of the two-wheel motor vehicle according to the first embodiment;
FIGS. 11A and 11B are schematic views each for describing an effect of the two-wheel motor vehicle according to the first embodiment;
FIGS. 12A and 12B are schematic views each for describing an effect of the two-wheel motor vehicle according to the first embodiment;
FIG. 13 is a perspective view for describing a steering device according to a second embodiment;
FIG. 14 is a cross-sectional view for describing a configuration of a steering damper according to the second embodiment;
FIG. 15 is a schematic view for describing operation of the steering damper according to the second embodiment;
FIG. 16 is a schematic view for describing operation of the steering damper according to the second embodiment;
FIG. 17 is a cross-sectional view for describing a configuration of a steering damper according to a third embodiment;
FIG. 18 is a schematic view for describing operation of the steering damper according to the third embodiment;
FIG. 19 is a schematic view for describing operation of the steering damper according to the third embodiment;
FIG. 20 is a perspective view for describing one modification of the present invention;
FIG. 21 is a perspective view for describing one modification of the present invention; and
FIG. 22 is a perspective view for describing one modification of the present invention.

### Embodiments of the invention

A detailed description will hereinafter be given of each embodiment of the present invention with consultation of drawings. A vehicle of the present invention is a straddled vehicle, and includes, for example, an internal combustion engine as power. A straddled vehicle according to each embodiment includes a vehicle body frame, a front wheel, and a rear wheel.

### First embodiment

### 1. Overall configuration

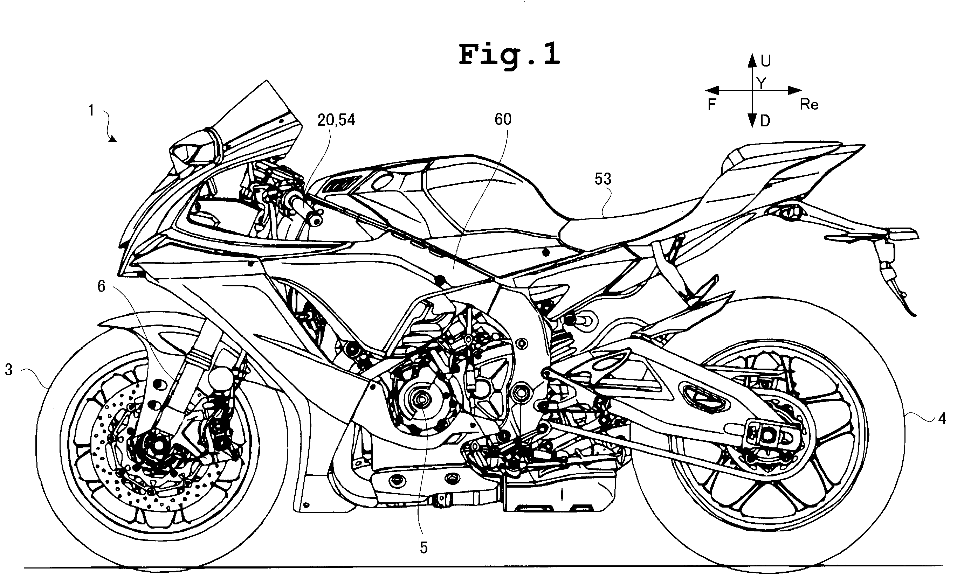

A detailed description will hereinafter be given of a first embodiment of the present invention with consultation of drawings. The vehicle of the first embodiment is an example of a straddled vehicle (on-road vehicle) including a front wheel and a rear wheel. As illustrated in FIG. 1, a two-wheel motor vehicle 1 according to the first embodiment includes a vehicle body frame 60, a front wheel 3, a rear wheel 4, an internal combustion engine (engine) 5, and a seat 53. Furthermore, the two-wheel motor vehicle 1 according to the first embodiment includes front forks 6 that support the front wheel 3 and a handlebar 20 for rotating the front forks 6. To ride on the two-wheel motor vehicle 1, a driver sits on the seat 53 while gripping grips 54 positioned at tip ends of the handlebar 20 and straddles the two-wheel motor vehicle 1. When the driver operates the handlebar 20 in this state, a steering device 19 including the front forks 6 and the like is rotated, and a steering angle of the front wheel 3 is changed.

Note that the reference sign F in FIG. 1 denotes forward of the vehicle, and the reference sign Re denotes rearward of the vehicle. Furthermore, in FIG. 1, the reference sign U denotes an upward direction of the vehicle, and the reference sign D denotes a downward direction of the vehicle. A width direction Y is a direction orthogonal to a front-rear direction and an up-down direction. The front-rear direction, the up-down direction, and the width direction Y are defined with reference to the driver. In the following drawings as well, these reference signs are appropriately denoted in order to clarify a direction of each member installed in the two-wheel motor vehicle 1. Note that the front-rear direction of the vehicle will be described on the basis of the vehicle body frame 60. Therefore, there is no change in the front-rear direction of the vehicle depending on operation of the steering device 19 by the driver.

### 2. Vehicle body frame

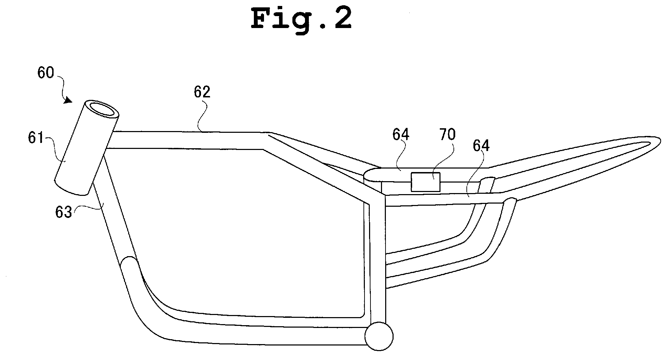

FIG. 2 describes the vehicle body frame 60 of the first embodiment. The vehicle body frame 60 is configured to be equipped with the engine 5 and the like, and is formed by a plurality of pipes combined forming a framework of the two-wheel motor vehicle 1. The two-wheel motor vehicle 1 is configured by incorporating the steering device 19, the front wheel 3, the rear wheel 4, and the like into the vehicle body frame 60. The vehicle body frame 60 includes a head pipe 61, a top tube 62, a down tube 63, and a seat frame 64. The head pipe 61 rotatably supports the steering device 19. The top tube 62 is a support tube coupled to the seat frame 64. The seat frame 64 is positioned below the seat 53 and configured to support weight of the driver.

The seat frame 64 supports a gyro sensor 70 that detects a posture of a vehicle body. The gyro sensor 70 is a triaxial sensor that detects how much the vehicle (vehicle body frame 60) is inclined in the front-rear direction, the up-down direction, and the width direction Y. The gyro sensor 70 can detect whether the two-wheel motor vehicle 1 is traveling on a curve or traveling straight.

### 3. Steering device

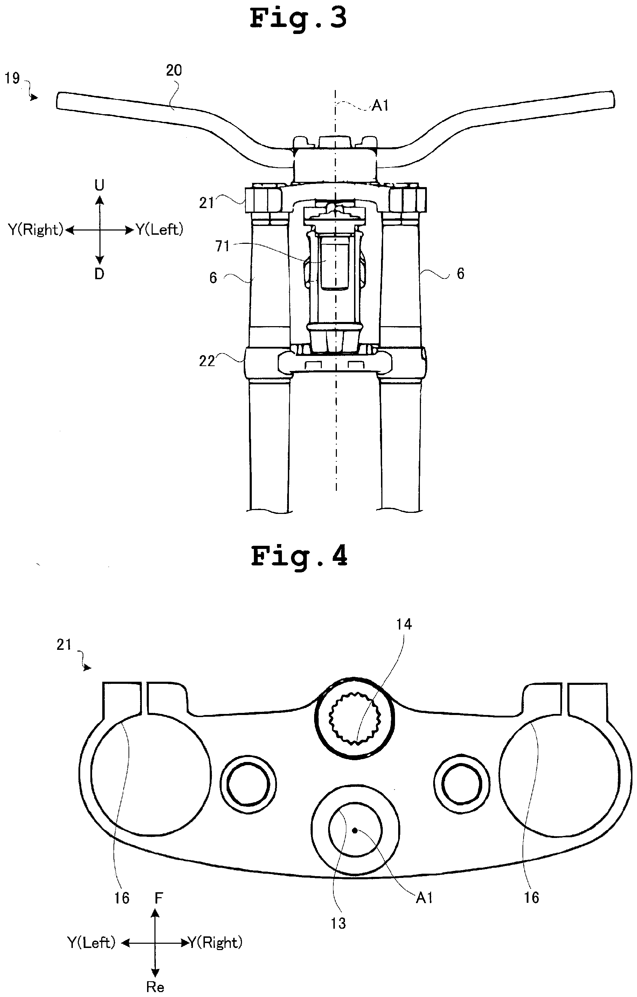

FIG. 3 describes the steering device 19 of the first embodiment. The steering device 19 is provided to steer the front wheel 3 to change the steering angle of the front wheel 3. The steering device 19 is rotatably supported by the vehicle body frame 60. The steering device 19 mainly includes the handlebar 20, a top bridge 21, a bottom bridge 22, and the two front forks 6. The handlebar 20 is a rod-shaped member extending in the width direction Y and including, at both ends thereof, the grips 54 to be gripped by the driver. The top bridge 21 is positioned below the handlebar 20 and is configured to support the front forks 6. The bottom bridge 22 is positioned below the top bridge 21 and is configured to support the front forks 6. The two front forks 6 are parallel with each other and rotatably support the front wheel 3. One front fork 6 is disposed on right of the front wheel 3, and another front fork 6 is disposed on left of the front wheel 3.

FIG. 4 describes the top bridge 21. The top bridge 21 is a plate-shaped member extending in the width direction Y, and includes a plurality of through holes. A stem bearing part 13 is positioned at a central portion of the top bridge 21 in the width direction Y and has a circular through hole. A center of the through hole coincides with a rotation axis A1 serving as a reference when the steering device 19 rotates. A spline supporting part 14 is positioned in front of the stem bearing part 13 and has a through hole provided with a spline groove. A handlebar stem 24 is inserted into the through hole. Therefore, the top bridge 21 and the handlebar stem 24 are firmly combined. The handlebar stem 24 will be described later. Clamps 16 are positioned at both end portions of the top bridge 21 in the width direction Y, and the respective front forks 6 are inserted through the Clamps 16. The bottom bridge 22 has a similar configuration to a configuration of the top bridge 21 except that the spline supporting part 14 is omitted.

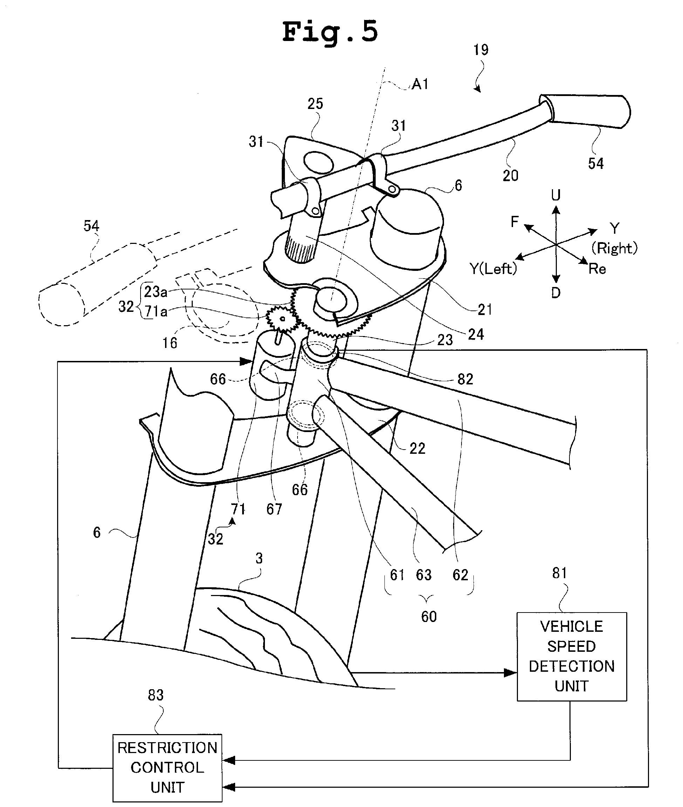

FIG. 5 is a perspective view for describing an overall configuration of the steering device 19. The handlebar stem 24 corresponds to a shaft member of the present invention. The handlebar stem 24 is a member extending parallel with the front forks 6, and a handlebar mount stay 25 is mounted on a tip end thereof. The handlebar stem 24 is coupled to the front forks 6 through the top bridge 21 and the bottom bridge 22. The handlebar mount stay 25 holds two handlebar mounts 31 gripping the handlebar 20. Each of the handlebar mounts 31 has a clamp through which the handlebar 20 is inserted. The handlebar 20 is fixed to the handlebar mount stay 25 by the clamps. Therefore, the handlebar 20 is coupled to the handlebar stem 24. The handlebar stem 24 is orthogonal to the handlebar 20.

A stem shaft 23 is a columnar member having one end fixed to the top bridge 21 and another end fixed to the bottom bridge 22. The stem shaft 23 is inserted through the head pipe 61 having a cylindrical shape, and links the steering device 19 and the vehicle body frame 60. The head pipe 61 is provided with a bearing 66 of the stem shaft 23, with which the head pipe 61 rotatably supports the stem shaft 23. The stem shaft 23 is parallel with the front forks 6 and is concentric with the rotation axis A1 of the steering device 19.

In this manner, according to the configuration of the present embodiment, the steering device 19 is configured by incorporating and integrating the handlebar 20, the handlebar mounts 31, the handlebar mount stay 25, the handlebar stem 24, the top bridge 21, the bottom bridge 22, the stem shaft 23, and the front forks 6. The steering device 19 is linked to the vehicle body frame 60 through the head pipe 61, and can rotate about the rotation axis A1 with respect to the vehicle body frame 60.

### 4. Restriction device

FIG. 5 also describes a restriction device 32 that restricts rotation of the steering device 19. The restriction device 32 corresponds to a restriction unit of the present invention. The restriction device 32 is configured to restrict rotation of the steering device 19 with respect to the vehicle body frame 60. The restriction device 32 includes a motor 71, a drive gear 71a, and a driven gear 23a. The motor 71 can restrict a change in the steering angle of the front wheel 3. The motor 71, the drive gear 71a, and the driven gear 23a correspond to a braking mechanism of the present invention. The braking mechanism is configured to apply braking force that brakes the rotation of the steering device 19 with respect to the vehicle body frame 60. The motor 71 is configured to generate the braking force and corresponds to an actuator of the present invention. The drive gear 71a and the driven gear 23a are configured to transmit the braking force from the motor 71 to the steering device 19, and correspond to a transmission mechanism of the present invention.

The motor 71 can rotate rightward and leftward, and an output shaft thereof is parallel with the stem shaft 23. The drive gear 71a is fixed to the output shaft of the motor 71 and meshes with the driven gear 23a. The driven gear 23a is fixed to the stem shaft 23. When the rotation of the steering device 19 is restricted by the restriction device 32, the motor 71 rotates in a direction against the rotation of the steering device 19. A coupling member 67 is a member that couples the head pipe 61 and a main body of the motor 71. Therefore, the main body of the motor 71 is supported by the vehicle body frame 60.

A steering angular velocity detection unit 82 corresponds to a first detection unit of the present invention. The steering angular velocity detection unit 82 is a sensor that detects steering angular velocity of the front wheel 3. The steering angular velocity detection unit 82 is configured to detect rotation of the steering device 19 with respect to the vehicle body frame 60. The steering angular velocity detection unit 82 can include, but not particularly limited to, for example, a rotary encoder that detects the steering angle of the front wheel 3 and a differential calculator that calculates the steering angular velocity on the basis of a temporal change in the steering angle. The steering angular velocity detection unit 82 detects the steering angular velocity of the front wheel 3 by detecting a rotation rate and rotation direction of the steering device 19 with respect to the vehicle body frame 60. The steering angular velocity of the front wheel in the present embodiment means a rotation rate of the front wheel 3 around the stem shaft 23. Normally, steering angular velocity of the steering device 19 coincides with the steering angular velocity of the front wheel. A steering direction of the front wheel in the present embodiment means a rotation direction of the front wheel 3 around the stem shaft 23. Normally, a steering direction of the steering device 19 coincides with a steering direction of the front wheel 3.

A restriction control unit 83 corresponds to a control unit of the present invention. The restriction control unit 83 can be implemented by, for example, a central processing unit (CPU). When the restriction control unit 83 restricts the change in the steering angle of the front wheel 3 through the motor 71, the restriction control unit 83 controls the motor 71 so as to input force, to the stem shaft 23, in a direction opposite to the steering direction of the front wheel 3. That is, when the motor 71 inputs force to the stem shaft 23, the force is applied to the steering device 19 integrated with the stem shaft 23. In this way, the change in the steering angle of the front wheel 3 is restricted. For example, "restricting the change in the steering angle of the front wheel 3" may mean completely stopping the change in the steering angle of the front wheel 3. Alternatively, "restricting the change in the steering angle of the front wheel 3" may mean reducing change in the steering angle of the front wheel 3. Specifically, the restriction control unit 83 may control the motor 71 so as to input, to the stem shaft 23, reaction force resisting the change in the steering angle of the front wheel 3. The reaction force is directed in a direction opposite to the steering direction of the front wheel 3. The reaction force may be sufficiently great to completely prevent the change in the steering angle of the front wheel 3. Alternatively, the reaction force may be relatively small, and the change in the steering angle of the front wheel 3 may not be completely forbidden. At this time, the restriction control unit 83 may control the motor 71 to input force in the opposite direction to the stem shaft 23 so as to completely prevent turning of the front wheel 3. Furthermore, the restriction control unit 83 may not completely forbid the turning of the front wheel 3, and for example, may control the motor 71 so that the turning of the front wheel 3 is gradually prevented as the front wheel 3 turns. Alternatively, the motor 71 may be controlled so that, as the front wheel 3 turns, the turning of the front wheel 3 is prevented with the same reaction force.

The restriction control unit 83 is a control unit that causes the motor 71 to restrict the change in the steering angle of the front wheel 3 when the steering angular velocity detected by the steering angular velocity detection unit 82 is equal to or greater than a predetermined value. The restriction control unit 83 causes the motor 71 to allow the change in the steering angle of the front wheel 3 when the steering angular velocity detected by the steering angular velocity detection unit 82 is smaller than the predetermined value.

When a mean value of the steering angular velocity of the front wheel 3 during a predetermined period is equal to or greater than the predetermined value, the restriction control unit 83 determines that a detected value is greater than the predetermined value. The predetermined period is 0.1 seconds or less, or 0.2 seconds or less.

The predetermined value is a value that is referred to when the restriction control unit 83 decides whether or not to allow the change in the steering angle of the front wheel 3 as described above. That is, when the change in the steering angle is greater than the predetermined value, the restriction control unit 83 restricts the change in the steering angle of the front wheel 3.

Incidentally, when the two-wheel motor vehicle 1 is about to curve, the driver banks the vehicle body. When the driver banks the vehicle body while traveling on a curve, angular velocity of a bank angle is generally 10 deg/s or less. When the bank angle changes, a steering angle of the steering device 19 changes by self-steering. Incidentally, the change in the steering angle by the self-steering increases as the angular velocity of the bank angle of the vehicle body increases.

Therefore, the predetermined value is set to a value greater than a general steering angular velocity of the steering device 19 when the two-wheel motor vehicle 1 travels. That is, the predetermined value is set to be greater than an upper limit value of the steering angular velocity of the front wheel 3 with the self-steering when the two-wheel motor vehicle 1 turns on the curve. Specifically, the predetermined value is greater than the steering angular velocity of the front wheel 3 with the self-steering when the angular velocity of the bank angle of the two-wheel motor vehicle 1 is 10 deg/s (10 degrees per second). With this configuration, the two-wheel motor vehicle 1 can travel on a curve appropriately.

In a case of the present embodiment, the change in the steering angle of the front wheel 3 is smaller than the predetermined value when the driver simply banks the vehicle body to travel on a curve. For this reason, the change in the steering angle of the front wheel 3 is not restricted merely by the driver banking the vehicle body to travel on the curve. Specifically, the two-wheel motor vehicle 1 of the present embodiment allows a change in the steering angle of the front wheel 3, the change being generated with the self-steering in which the angular velocity of the bank angle is at least 10 deg/s or less. Therefore, the two-wheel motor vehicle 1 of the present embodiment allows general banking while traveling on a curve. Accordingly, the driver can travel on the curve while appropriately banking the two-wheel motor vehicle 1.

Thus, when the two-wheel motor vehicle 1 travels straight and the steering angular velocity detected by the steering angular velocity detection unit 82 is smaller than the predetermined value, the restriction control unit 83 causes the restriction device 32 to allow the change in the steering angle of the front wheel 3. When the two-wheel motor vehicle 1 turns on a curve and the steering angular velocity detected by the steering angular velocity detection unit 82 is smaller than the predetermined value, the restriction control unit 83 causes the restriction device 32 to allow the change in the steering angle of the front wheel 3.

Meanwhile, the predetermined value is set to a value smaller than the steering angular velocity of the steering device 19, the steering angular velocity being unlikely to be generated when the two-wheel motor vehicle 1 travels. Therefore, for example, at the steering angular velocity of the front wheel 3 with the self-steering when the angular velocity of the bank angle of the two-wheel motor vehicle 1 is 50 deg/s, the steering device 19 is restricted by the restriction device 32. With this configuration, the two-wheel motor vehicle 1 can travel on a curve appropriately. When the two-wheel motor vehicle 1 is about to curve, the driver banks the vehicle body. Then, the steering angle of the steering device 19 changes by self-steering. However, when a disturbance from a roadway is input to the front wheel 3 at this time, the steering angle of the front wheel 3 may be inclined to change at a speed higher than self-steering generated when the driver banks the vehicle body. In the two-wheel motor vehicle 1 of the present embodiment, when the steering angular velocity of the front wheel 3 reaches or exceeds a certain value, the change in the steering angle of the front wheel 3 is restricted by the restriction control unit 83. Therefore, the two-wheel motor vehicle 1 of the present embodiment allows general banking while traveling on a curve, but restricts a sudden change in the steering angle of the steering device 19 due to the disturbance input to the front wheel 3. This is advantageous for keeping the bank angle of the two-wheel motor vehicle 1 traveling on the curve within an appropriate range.

Therefore, the predetermined value is preferably equal to or smaller than the steering angular velocity of the front wheel 3 with the self-steering when the angular velocity of the bank angle of the two-wheel motor vehicle 1 is 50 deg/s, and is preferably equal to or more than the steering angular velocity of the front wheel 3 with the self-steering when the angular velocity of the bank angle of the two-wheel motor vehicle 1 is 10 deg/s.

Thus, when the front wheel 3 experiences a significant force from at least either the steering device 19 or a road surface in contact with the front wheel 3, the steering angle of the front wheel 3 changes at steering angular velocity greater than the predetermined value.

Note that when the two-wheel motor vehicle 1 is traveling at a low speed, a change in the steering angle of the front wheel 3 is allowed regardless of whether or not the steering angular velocity of the steering device 19 is equal to or greater than the predetermined value. This point will be described below.

A vehicle speed detection unit 81 in FIG. 5 corresponds to a speed detection unit of the present invention. The vehicle speed detection unit 81 is configured to detect speed of the two-wheel motor vehicle 1. The vehicle speed detection unit 81 is a sensor that detects travel speed of the two-wheel motor vehicle 1 by detecting the rotation rate of the front wheel 3. The vehicle speed detection unit 81 inputs the travel speed of the two-wheel motor vehicle 1 to the restriction control unit 83. The restriction control unit 83 changes control of the restriction device 32 according to the detected vehicle speed. That is, when the vehicle speed is less than a predetermined speed, the restriction control unit 83 allows the change in the steering angle of the front wheel 3 regardless of whether or not the steering angular velocity of the steering device 19 is equal to or greater than the predetermined value. With such a configuration, for example, when the driver walks the two-wheel motor vehicle 1 of the present embodiment, the steering angle of the steering device 19 can be greatly changed. Furthermore, when the two-wheel motor vehicle 1 of the present embodiment is traveling at a low speed, the driver can greatly change the steering angle of the steering device 19 and quickly steer the two-wheel motor vehicle 1.

The predetermined speed is preferably 40 km/h (40 kilometer per hour). That is, the restriction control unit 83 operates assuming that the vehicle speed is high when the speed of the two-wheel motor vehicle 1 is 40 km/h. Therefore, the predetermined speed may be, for example, 40 km/h. Furthermore, the predetermined speed may be a value less than 40 km/h, such as 35 km/h, for example.

Thus, when the vehicle speed detected by the vehicle speed detection unit 81 is high that is, for example, 40 km/h or more, and the value detected by the steering angular velocity detection unit 82 is equal to or greater than a predetermined value, the restriction control unit 83 causes the restriction device 32 to restrict the change in the steering angle of the front wheel 3. When the speed detected by the vehicle speed detection unit 81 is low that is, for example, less than 40 km/h, and the value detected by the steering angular velocity detection unit 82 is equal to or greater than the predetermined value, the restriction control unit 83 causes the restriction device 32 to allow the change in the steering angle of the front wheel 3. Therefore, operation of the restriction control unit 83 using the above-described predetermined value is based on a premise that the vehicle speed is equal to or higher than the predetermined speed.

That is, when the speed detected by the vehicle speed detection unit 81 is 40 km/h or more, and the steering angular velocity detected by the steering angular velocity detection unit 82 is smaller than the predetermined value, the restriction control unit 83 causes the restriction device 32 to allow the change in the steering angle of the front wheel 3. Furthermore, when the speed detected by the vehicle speed detection unit 81 is smaller than 40 km/h, and the steering angular velocity detected by the steering angular velocity detection unit 82 is smaller than the predetermined value, the restriction control unit 83 is allowed by the restriction device 32 to change in the steering angle of the front wheel 3.

Furthermore, when starting traveling of a stopped vehicle, the restriction control unit 83 controls the restriction device 32 on the basis of control for low-speed traveling.

### 5. Operation of restriction device

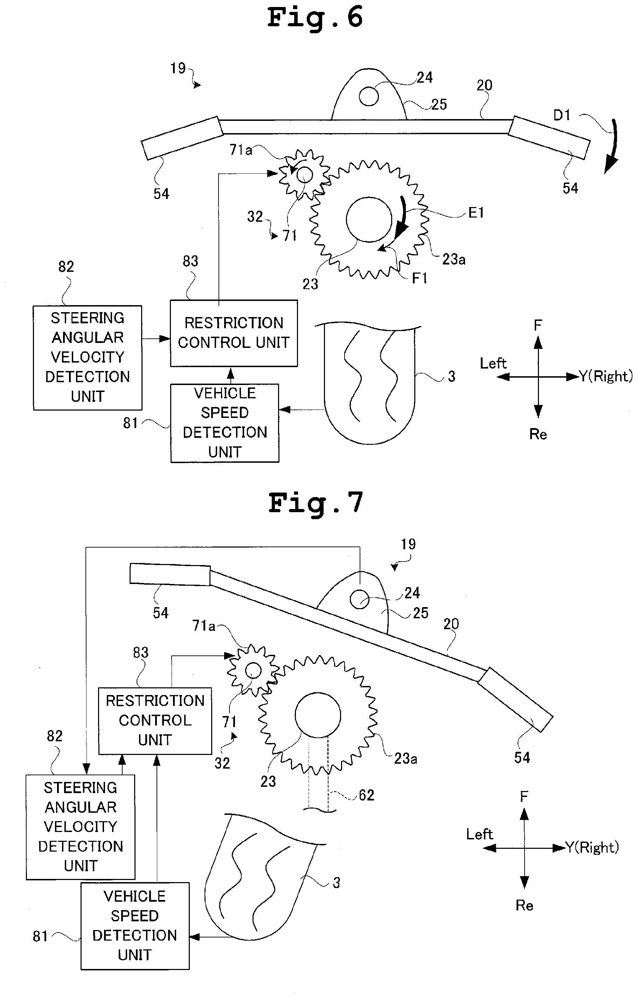

FIGS. 6 to 8 illustrate a state where the change in the steering angle of the steering device 19 is selectively restricted by the restriction control unit 83. Hereinafter, these diagrams will be described.

FIG. 6 illustrates operation of the restriction control unit 83 when the driver turns the handlebar 20 at steering angular velocity equal to or more than the predetermined value, during low-speed traveling. The vehicle speed detected by the vehicle speed detection unit 81 is always input to the restriction control unit 83. The steering angular velocity detected by the steering angular velocity detection unit 82 is always input to the restriction control unit 83. When the driver applies force D1 to the handlebar 20, force E1 acts on the stem shaft 23. Steering angular velocity exceeding the predetermined value is detected by the steering angular velocity detection unit 82 and input to the restriction control unit 83. Because the vehicle speed at this time is low, the restriction control unit 83 allows a change in the steering angle input by the driver. Then, as illustrated in FIG. 7, the restriction control unit 83 allows turning of the handlebar 20, and the steering angle of the front wheel 3 changes according to the force E1.

Note that, during a period from the state illustrated FIG. 6 to the state illustrated in FIG. 7, the restriction device 32 does not resist a change in the steering angle of the front wheel 3. For example, when the motor 71 is not driven, the restriction device 32 does not resist a change in the steering angle of the front wheel 3. In this case, the restriction control unit 83 may allow a change in the steering angle of the front wheel 3 without driving the motor 71. At this time, because the motor 71 is not driven, the restriction device 32 slightly resists the change in the steering angle of the front wheel 3. In this case, the restriction control unit 83 may drive the motor 71. Then, the restriction control unit 83 may erase a slight resistance of the restriction device 32 to the change in the steering angle of the front wheel 3 by the driving force of the motor 71. As a result, the steering angle of the front wheel 3 changes according to the force E1.

During the period from the state illustrated FIG. 6 to the state illustrated in FIG. 7, the restriction device 32 may promote the change in the steering angle of the front wheel 3. For example, the restriction control unit 83 actively drives the motor 71. Accordingly, the restriction device 32 outputs force F1. The force F1 acts on the stem shaft 23. The force F1 acts in the same direction as the force E1. Resultant force of the force E1 and the force F1 rotates the stem shaft 23. The steering angle of the front wheel 3 changes according to the resultant force of the force E1 and the force F1. That is, the force F1 assists operation of the handlebar 20 by the driver.

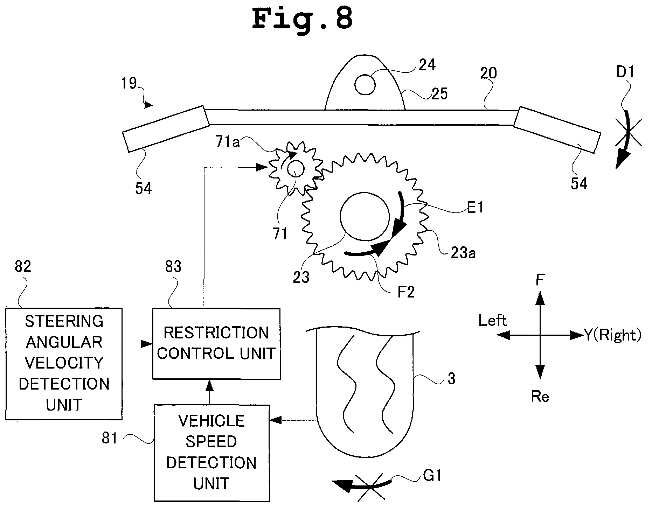

FIG. 8 illustrates operation of the restriction control unit 83 when the driver tries to turn the handlebar 20 at steering angular velocity equal to or more than the predetermined value, during high-speed traveling. When the driver applies force D1 to the handlebar 20, force E1 acts on the stem shaft 23. Steering angular velocity exceeding the predetermined value is detected by the steering angular velocity detection unit 82 and input to the restriction control unit 83. Because the vehicle speed at this time is high, the restriction control unit 83 restricts a change in the steering angle input by the driver. Then, as illustrated in FIG. 8, the restriction control unit 83 forbids turning of the handlebar 20, and a change in the steering angle of the front wheel 3 is forbidden. Specifically, the restriction control unit 83 controls the motor 71 to cause the restriction device 32 to output force F2. The force F2 acts on the stem shaft 23. The force F2 acts in a direction opposite to the direction of the force E1. The force F1 cancels out the force E1. The stem shaft 23 does not rotate. As a result, the steering angle of the front wheel 3 does not change.

Similarly, even if a force denoted by the arrow D2 in FIG. 8 is applied to the front wheel 3 due to disturbance, the restriction control unit 83 forbids the change in the steering angle of the front wheel 3. Various large and small disturbances may be input to the two-wheel motor vehicle 1. When a disturbance input is great enough to destabilize the vehicle, the restriction control unit 83 forbids the change in the steering angle of the front wheel 3. Whether or not the disturbance is great is judged by whether or not the steering angular velocity of the front wheel 3 is equal to or more than the predetermined value. Thus, the restriction control unit 83 operates without distinguishing between input of external force to the front wheel 3 and input to the handlebar 20 by the driver.

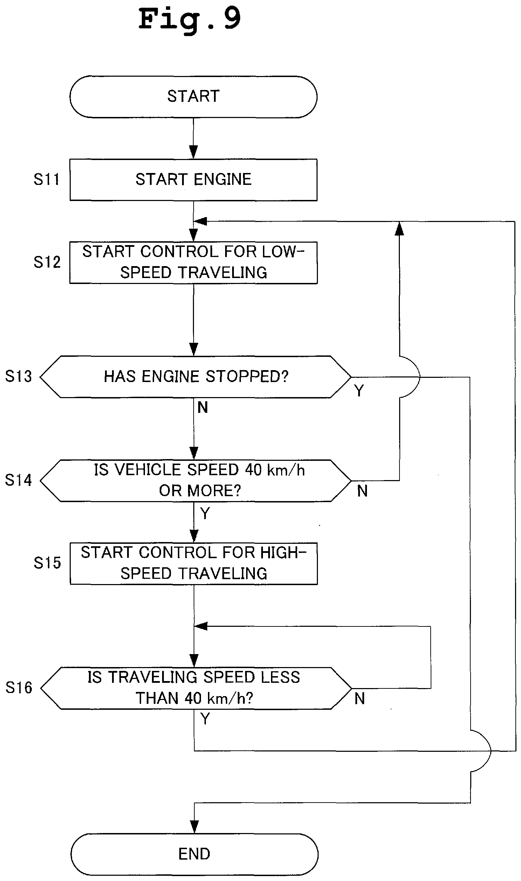

FIG. 9 is a flowchart for describing operation of the restriction device. Hereinafter, the flowchart will be described in order.

Step S11: First, the engine 5 of the two-wheel motor vehicle 1 is started by the driver. Then, the restriction control unit 83 is also activated to start control operation. Then, the processing proceeds to Step S12.

Step S12: When activated, the restriction control unit 83 starts to control the motor 71 by control for low-speed traveling. Therefore, in this case, quick steering by the driver is allowed. The control for low-speed traveling is continued when the two-wheel motor vehicle 1 starts traveling.

Step S13: The restriction control unit 83 judges whether or not the engine 5 has stopped. "The engine 5 stops" means that traveling of the two-wheel motor vehicle 1 has ended. If the judgement is true, the processing ends. If the judgement is false, the processing proceeds to Step S14.

Step S14: The restriction control unit 83 judges whether or not the vehicle speed is 40 km/h or more. If the judgement is true, the processing proceeds to Step S15. If the judgement is false, the processing returns to Step S12.

Step S15: The restriction control unit 83 starts to control the motor 71 by control for high-speed traveling. Therefore, in this case, quick steering by the driver is restricted. Similarly, a sudden change in the steering angle of the front wheel 3 due to a disturbance is also restricted. Then, the processing proceeds to Step S16.

Step S16: The restriction control unit 83 judges whether or not the vehicle speed is less than 40 km/h. If the judgement is true, the processing returns to Step S12, and the control for low-speed traveling is started again. If the judgement is false, the processing returns to Step S16.

### 6. Effects of present invention

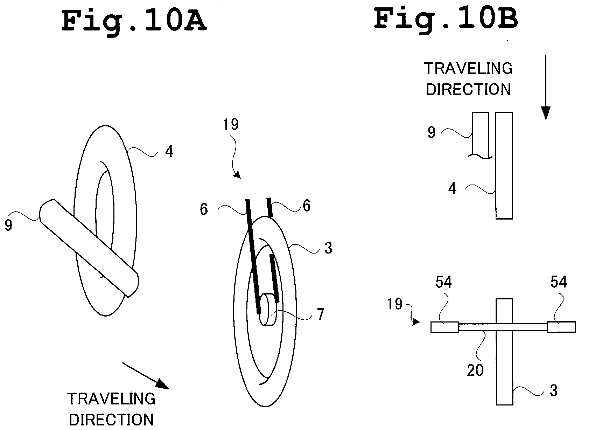

As described above, according to the present invention, it is advantageous for achieving a stable posture of the two-wheel motor vehicle 1 even if there is an input of a disturbance to the front wheel 3. FIGS. 10A to 12B are schematic views for describing advantageous effects of the present invention. In order to know the posture of the two-wheel motor vehicle 1, a muffler 9 attached to the rear wheel 4 illustrated in FIGS. 10A to 12B can be referred to. Furthermore, in order to know the posture of the two-wheel motor vehicle 1, a front axle 7 attached to the front wheel 3 illustrated in FIGS. 10A to 12B can be referred to.

FIG. 10A schematically illustrates the two-wheel motor vehicle 1 traveling straight. Because the two-wheel motor vehicle 1 is not banked at this time, the front wheel 3 and the rear wheel 4 are in contact with a road surface at a right angle. FIG. 10B is a schematic view of the two-wheel motor vehicle 1 traveling straight as viewed from above. At this time, the steering angle of the steering device 19 in the two-wheel motor vehicle 1 is 0°.

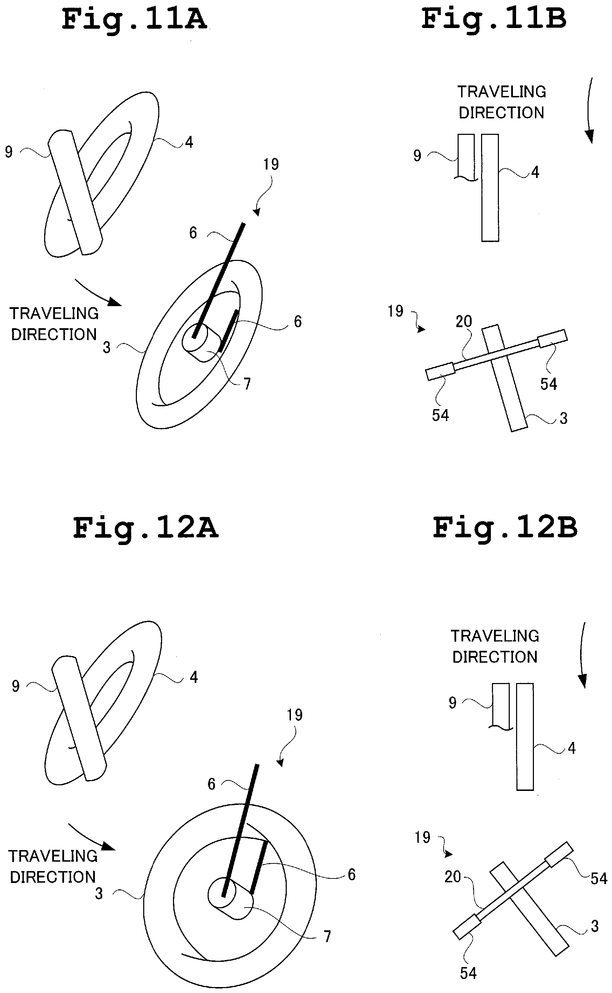

FIG. 11A schematically illustrates the two-wheel motor vehicle 1 traveling on a curve. The two-wheel motor vehicle 1 at this time is banked by a predetermined bank angle. FIG. 11B is a schematic view of the two-wheel motor vehicle 1 traveling on a curve as viewed from above. The steering device 19 in the two-wheel motor vehicle 1 at this time has a predetermined steering angle determined by self-steering.

FIG. 12A schematically illustrates a state where the two-wheel motor vehicle 1 traveling on a curve is subjected to a disturbance. When a disturbance from a road surface is input to the front wheel 3, as illustrated in FIG. 12A, the steering angle of the steering device 19 tends to further increase from the state illustrated in FIG. 11A. That is, the disturbance tries to further turn the handlebar 20 naturally steered in one direction by self-steering, in the same direction. FIG. 12B is a schematic view of the two-wheel motor vehicle 1 traveling on a curve as viewed from above, and illustrates a state where the disturbance tries to increase the steering angle.

According to the two-wheel motor vehicle 1 of the present invention, the change in the steering angle of the steering device 19 based on a disturbance as illustrated in FIGS. 12A and 12B is inhibited. Therefore, the two-wheel motor vehicle 1 of the present invention can inhibit the posture thereof from becoming unstable even when traveling on a curve.

The two-wheel motor vehicle 1 includes the vehicle body frame 60, the steering device 19, the front wheel 3, the steering angular velocity detection unit 82, the restriction device 32, and the restriction control unit 83. The steering device 19 is rotatably supported by the vehicle body frame 60. The front wheel 3 is steered by the steering device 19. When the front wheel 3 is steered by the steering device 19, the steering angle of the front wheel 3 changes. The steering angular velocity detection unit 82 detects the steering angular velocity of the front wheel 3. The restriction device 32 restricts a change in the steering angle of the front wheel 3. The restriction control unit 83 controls the restriction device 32 on the basis of a result detected by the steering angular velocity detection unit 82.

Specifically, when the value detected by the steering angular velocity detection unit 82 is equal to or greater than the predetermined value, the restriction control unit 83 causes the restriction device 32 to restrict the change in the steering angle of the front wheel 3. In other words, when the detected value reaches or exceeds the predetermined value, the restriction device 32 decreases the steering angular velocity. A period during which the detected value reaches or exceeds the predetermined value is not a long period. The period during which the detected value is equal to or greater than the predetermined value is short. Therefore, even if the detected value reaches or exceeds the predetermined value, it is advantageous for achieving a stable posture of the two-wheel motor vehicle 1.

When the value detected by the steering angular velocity detection unit 82 is smaller than the predetermined value, the restriction control unit 83 causes the restriction device 32 to allow the change in the steering angle of the front wheel 3, and does not cause the restriction unit to restrict the change. With this configuration, the driver can operate the steering device 19 at a desired steering angular velocity.

When the two-wheel motor vehicle 1 travels straight, a change in the steering angle of the front wheel 3 is allowed. With this configuration, the driver can freely operate the steering device 19.

When the speed of the two-wheel motor vehicle 1 (vehicle speed) is low, a change in the steering angle of the front wheel 3 is allowed. With this configuration, the driver can freely operate the steering device 19.

When the speed of the two-wheel motor vehicle 1 (vehicle speed) is, for example, less than 40 km/h, a change in the steering angle of the front wheel 3 is allowed. With this configuration, the driver can freely operate the steering device 19.

The predetermined value is greater than the steering angular velocity of the front wheel 3 with the self-steering generated when the two-wheel motor vehicle 1 turns a curve. With this configuration, the rotation of the front wheel 3 due to self-steering is not affected by the restriction control unit 83.

When the mean value of the steering angular velocity of the front wheel 3 is equal to or greater than the predetermined value during a predetermined period of 0.2 seconds or less, the restriction control unit 83 determines that the detected value is greater than the predetermined value, and restricts the change in the steering angle of the front wheel 3. With this configuration, it is advantageous for achieving a stable posture of the two-wheel motor vehicle 1 even when an unexpected disturbance is input.

The steering angular velocity detection unit 82 detects the steering angular velocity of the front wheel 3 or acceleration at the steering angle of the front wheel 3 by detecting a relative rotation amount of the steering device 19 with respect to the vehicle body frame 60. According to such a configuration, the steering angular velocity of the front wheel 3 can be reliably detected.

The restriction device 32 restricts rotation of the steering device 19 with respect to the vehicle body frame 60. With this configuration, the restriction device 32 can reliably restrict the rotation of the steering device 19 with respect to the vehicle body frame 60.

The restriction device 32 includes the motor 71, the drive gear 71a, and the driven gear 23a. The motor 71, the drive gear 71a, and the driven gear 23a apply braking force for braking the rotation of the steering device 19 with respect to the vehicle body frame 60. With this configuration, because the restriction device 32 can actively restrict the rotation of the steering device 19, it is possible to provide the two-wheel motor vehicle 1 that can more reliably restrict the change in the steering angle of the front wheel 3.

According to the above-described configuration, the restriction device 32 includes the motor 71, and the drive gear 71a and driven gear 23a that transmit the braking force of the motor 71 to the steering device 19. With this configuration, it is easy for the motor 71, the drive gear 71a, and the driven gear 23a to apply the braking force to the steering device 19.

### Second embodiment

### 7. Overview of second embodiment

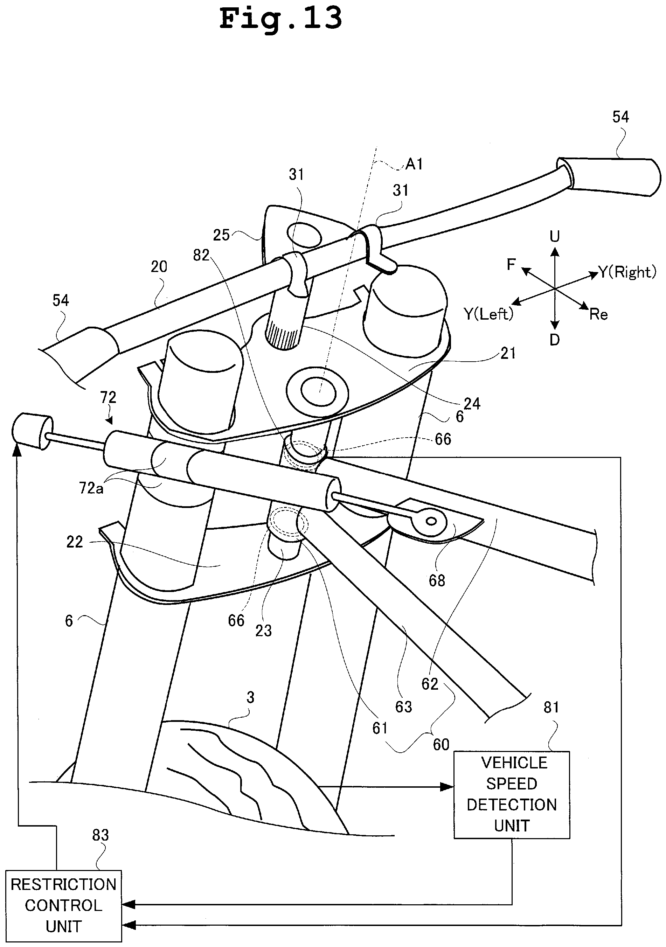

Next, a configuration of a two-wheel motor vehicle 1 according to a second embodiment will be described. As illustrated in FIG. 13, the two-wheel motor vehicle 1 according to the present embodiment includes a steering damper 72. The steering damper 72 corresponds to a restriction unit of the present invention. The steering damper 72 is a member capable of resisting rotation of a steering device 19 with respect to a vehicle body frame 60. The steering damper 72 does not always inhibit rotation of the steering device 19. The steering damper 72 inhibits or allows the rotation of the steering device 19 depending on a situation. Details of this point will be described later.

In the present embodiment, the steering angular velocity detection unit 82, the restriction device 32 (the motor 71, the drive gear 71a, and the driven gear 23a), and the coupling member 67 that are described in the first embodiment are not necessarily required.

In other configurations, the steering device 19 of the present embodiment and each member around the steering device 19 are similar to the configuration according to the first embodiment.

A bracket 72a is a member that couples the front forks 6 and the steering damper 72. A main body (cylinder tube) of the steering damper 72 is supported by the front forks 6.

A clevis 68 is a plate-shaped member provided on a top tube 62 of the vehicle body frame 60. The clevis 68 is configured to support a rod of the steering damper 72. Thus, the steering damper 72 is provided so as to bridge the vehicle body frame 60 and the steering device 19 so that the rotation of the steering device 19 with respect to the vehicle body frame 60 can be restricted. Thus, the steering damper 72 is coupled to the steering device 19 and the vehicle body frame 60.

### 8. Configuration of steering damper

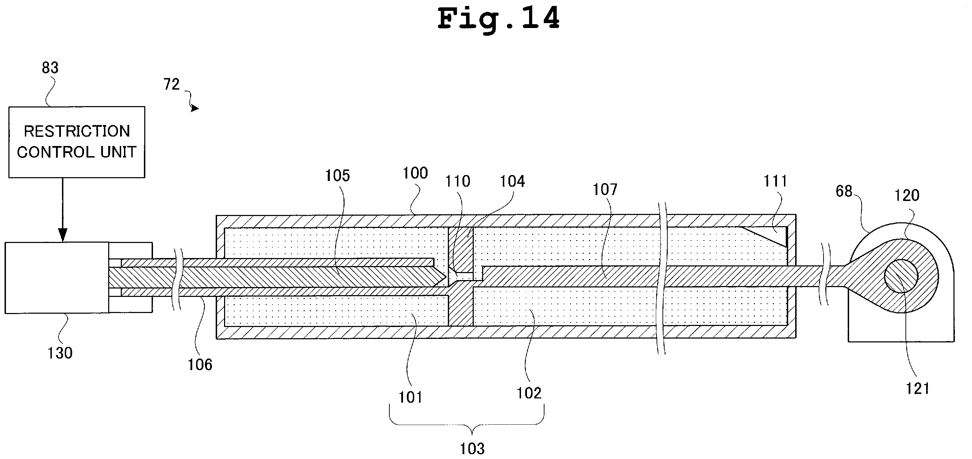

A configuration of the steering damper 72 of the present embodiment will be described with reference to FIG. 14. The steering damper 72 includes a cylinder tube 100 having a cylindrical shape. The cylinder tube 100 is coupled to the steering device 19. Both ends of the cylinder tube 100 are closed, and hydraulic oil is held inside. The cylinder tube 100 includes inside thereof a first chamber 101 for storing hydraulic oil and a second chamber 102 for storing hydraulic oil as well. The first chamber 101 and the second chamber 102 are collectively referred to as a fluid receiver 103. A piston 104 is positioned between the first chamber 101 and the second chamber 102. The piston 104 is installed inside the cylinder tube 100. Then, the cylinder tube 100 includes the first chamber 101 and the second chamber 102 partitioned by the piston 104. The piston 104 moves according to hydraulic pressure in the cylinder tube 100.

A main shaft 106 is integrated with the piston 104 and has a tip end protruding from one end of the cylinder tube 100. That is, a through hole is provided at a closed end defining the first chamber 101 in the cylinder tube 100. The main shaft 106 is inserted into the through hole. A rod 107 is integrated with the piston 104 and extends in a direction opposite to the main shaft 106. Then, a tip end of the rod 107 protrudes from another end of the cylinder tube 100. That is, a through hole is provided at a closed end defining the second chamber 102 in the cylinder tube 100. The rod 107 is configured to be inserted into the through hole.

A rod end 120 to be coupled to the clevis 68 is provided at a tip end of the rod 107. The rod 107 is coupled to the vehicle body frame 60. Each of the rod end 120 and the clevis 68 is provided with a through hole, and a pin 121 is inserted through each of the through holes. The rod end 120, the pin 121, and the clevis 68 constitute a joint. With this joint, the steering device 19 is rotatable with respect to the vehicle body frame 60.

The main shaft 106 is hollow, and a needle 105 is inserted therein. A tip end of the needle 105 is movable forward and backward with respect to the piston 104.

The piston 104 is provided with an orifice 110 that allows communication between the first chamber 101 and the second chamber 102. The orifice 110 corresponds to a first path of the present invention. Due to presence of the orifice 110, the hydraulic oil in the first chamber 101 can move to the second chamber 102. Furthermore, the hydraulic oil in the second chamber 102 can move to the first chamber 101. The orifice 110 is configured to allow communication between the first chamber 101 and the second chamber 102.

The needle 105 is provided for the purpose of adjusting an amount of hydraulic oil passing through the orifice 110.

A needle motor 130 is a motor provided at a base end portion of the needle 105, and moves the needle 105 forward and backward with respect to the main shaft 106 by rotating the needle 105. For example, the main shaft 106 and the needle 105 screw together. When the needle 105 moves forward and backward with respect to the main shaft 106, the needle 105 opens and closes the orifice 110. When the needle 105 opens and closes the orifice 110, hydraulic pressure experienced by the piston 104 changes. The needle motor 130 can adjust the hydraulic pressure experienced by the piston 104, according to control by a restriction control unit 83. The needle motor 130 corresponds to a damping force adjustment unit of the present invention.

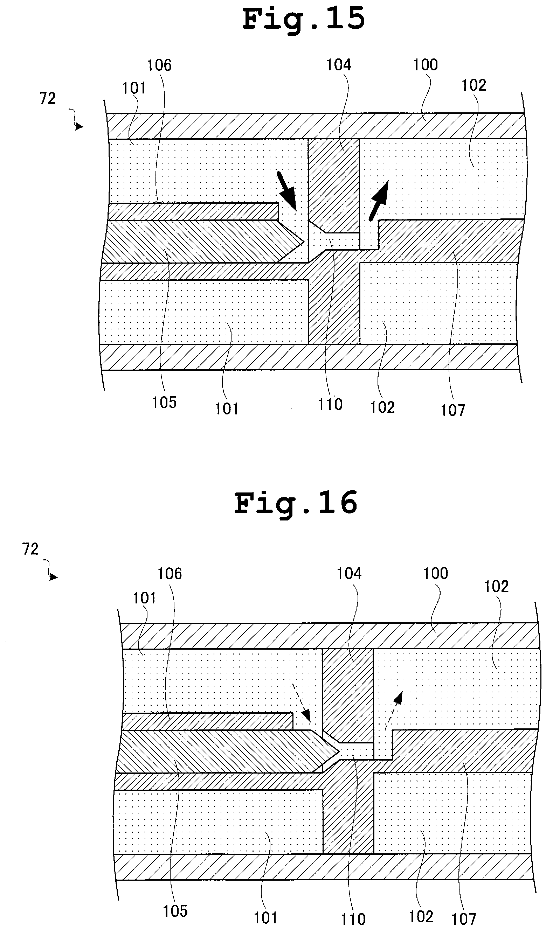

Refer to FIG. 15. When the needle 105 is rotated in one side, the tip end of the needle 105 moves away from the orifice 110. In FIG. 15, the needle motor 130 closes the orifice 110. In FIG. 15, the orifice 110 is in an open state. When the orifice 110 is in the open state, the hydraulic oil easily passes through the orifice 110, and the piston 104 easily moves. When the piston 104 easily moves, the steering damper 72 allows a change in a steering angle of a front wheel 3.

Refer to FIG. 16. When the needle 105 is rotated to another side, the tip end of the needle 105 approaches the orifice 110. In FIG. 16, the needle motor 130 opens the orifice 110. In FIG. 16, the orifice 110 is in a closed state. When the orifice 110 is in the closed state, the hydraulic oil is less likely to pass through the orifice 110, and the piston 104 is less likely to move. When the piston 104 is difficult to move, the steering damper 72 restricts the change in the steering angle of the front wheel 3.

Thus, the needle motor 130 opens and closes the orifice 110. That is, if the needle motor 130 is controlled, ease of rotation of the steering device 19 with respect to the vehicle body frame 60 changes.

The restriction control unit 83 is configured to control the needle motor 130. In addition, as illustrated in FIG. 14, bubbles 111 may be present inside the cylinder tube 100 in addition to the hydraulic oil.

Also in the present embodiment, as in the first embodiment, the change in the steering angle of the front wheel 3 is allowed by control for low-speed traveling, and the change in the steering angle of the front wheel 3 is restricted by control for high-speed traveling. In the present embodiment, in order to perform the control for low-speed traveling, the restriction control unit 83 separates the tip end of the needle 105 from the orifice 110 as illustrated in FIG. 15. When the restriction control unit 83 allows the change in the steering angle of the front wheel 3, the needle motor 130 opens the orifice 110. Even if a driver turns the handlebar 20 at a high speed in this state, the hydraulic oil easily moves from the first chamber 101 to the second chamber 102 (or from the second chamber 102 to the first chamber 101) through the orifice 110. Therefore, the piston 104 is actuated according to steering by the driver, and the steering device 19 rotates accordingly.

In the present embodiment, in order to perform the control for high-speed traveling, the restriction control unit 83 brings the tip end of the needle 105 close to the orifice 110 as illustrated in FIG. 16. When the restriction control unit 83 restricts the change in the steering angle of the front wheel 3, the needle motor 130 closes the orifice 110. Even if a disturbance from a road surface is input to the front wheel 3 in this state, the hydraulic oil is less likely to move from the first chamber 101 to the second chamber 102 (or from the second chamber 102 to the first chamber 101) through the orifice 110. Therefore, the piston 104 is not actuated depending on a disturbance input to the front wheel 3, by which the rotation of the steering device 19 is restricted.

Meanwhile, if the driver turns the handlebar 20 at a low speed in this state, the hydraulic oil slowly moves from the first chamber 101 to the second chamber 102 (or from the second chamber 102 to the first chamber 101) through the orifice 110. Therefore, the piston 104 is actuated according to steering by the driver, and the steering device 19 rotates accordingly. Thus, under control for high-speed traveling, the steering damper 72 restricts the change in the steering angle of the front wheel 3 at a high speed, and allows steering at a low speed (that is, the change in the steering angle of the front wheel 3 at a low speed).

### 9. Operation of steering damper

Operation of the steering damper 72 can be described with reference to the flowchart described with reference to FIG. 9. Hereinafter, the flowchart will be described in order.

Step S11: First, the engine 5 of the two-wheel motor vehicle 1 is started by the driver. Then, the restriction control unit 83 is also activated to start control operation. Then, the processing proceeds to Step S12.

Step S12: When activated, the restriction control unit 83 starts to control the needle motor 130 under control for low-speed traveling. Then, the tip end of the needle 105 in the steering damper 72 moves away from the orifice 110. That is, the orifice 110 is opened. The piston 104 easily moves. Therefore, in this case, quick steering by the driver is allowed. The control for low-speed traveling is continued when the two-wheel motor vehicle 1 starts traveling.

Step S13: The restriction control unit 83 judges whether or not the engine 5 has stopped. If the judgement is true, the processing ends. If the judgement is false, the processing proceeds to Step S14.

Step S14: The restriction control unit 83 judges whether or not the vehicle speed is 40 km/h or more. If the judgement is true, the processing proceeds to Step S15. If the judgement is false, the processing returns to Step S12.

Step S15: The restriction control unit 83 starts to control the needle motor 130 under control for high-speed traveling. Then, the tip end of the needle 105 in the steering damper 72 is brought close to the orifice 110. That is, the orifice 110 is closed. The piston 104 is less likely to move. Therefore, in this case, quick steering by the driver is restricted. Similarly, a sudden change in the steering angle of the front wheel 3 due to a disturbance is also restricted. Then, the processing proceeds to Step S16.

Step S16: The restriction control unit 83 judges whether or not the vehicle speed is less than 40 km/h. If the judgement is true, the processing returns to Step S12, and the control for low-speed traveling is started again. If the judgement is false, the processing returns to Step S16.

### 10. Effects of configuration of second embodiment

As described above, according to the configuration of the present embodiment, the restriction unit is the steering damper 72. The steering damper 72 includes the cylinder tube 100, the piston 104, the main shaft 106, and the needle motor 130, and, according to control by the restriction control unit 83, the needle motor 130 can adjust hydraulic pressure experienced by the piston 104. With this configuration, the restriction unit can be configured by using an existing component with high reliability.

Furthermore, according to the configuration of the present embodiment, the cylinder tube 100 includes the first chamber 101 and the second chamber 102 that are partitioned by the piston 104, and the first chamber 101 and the second chamber 102 store the hydraulic oil. The orifice 110 communicates with the first chamber 101 and the second chamber 102. The needle motor 130 opens and closes the orifice 110. When the steering damper 72 restricts the change in the steering angle of the front wheel 3, the needle motor 130 closes the orifice 110. When the steering damper 72 allows the change in the steering angle of the front wheel 3, the needle motor 130 opens the orifice 110. With this configuration, the restriction unit can be configured by using an existing component with high reliability.

### Third embodiment

### 11. Overview of third embodiment

Next, a configuration of a two-wheel motor vehicle 1 according to a third embodiment will be described. The two-wheel motor vehicle 1 according to the present embodiment is configured to restrict a change in a steering angle of a front wheel 3 with a steering damper as in the second embodiment. The steering damper of the present embodiment is different in structure from the steering damper 72 of the second embodiment. However, the steering damper of the present embodiment has functions similar to the functions of the steering damper 72 of the second embodiment, and exhibits effects similar to the effects of the steering damper 72 of the second embodiment.

### 12. Configuration of steering damper

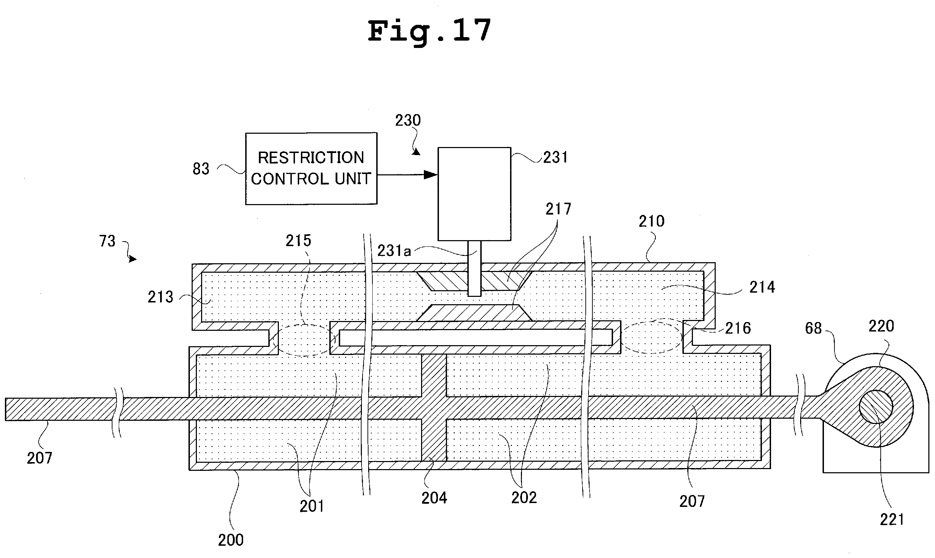

FIG. 17 illustrates a specific configuration of a steering damper 73 according to the present embodiment. The steering damper 73 includes a main tube 200 and a sub tube 210. At least either the main tube 200 or the sub tube 210 is supported by front forks 6.

The main tube 200 has a cylindrical shape. The sub tube 210 has a cylindrical shape. The main tube 200 and the sub tube 210 are parallel with each other. Both ends of the main tube 200 are closed, and an inside of the main tube 200 is filled with hydraulic oil. Both ends of the sub tube 210 are closed, and an inside of the sub tube 210 is filled with hydraulic oil. The main tube 200 has a first chamber 201 and a second chamber 202 for holding hydraulic oil. A piston 204 is a member that divides an inside of the main tube 200 into the first chamber 201 and the second chamber 202, and can move in the main tube 200 in an extending direction of the main tube 200. Accordingly, sizes of the first chamber 201 and the second chamber 202 change.

A main shaft 207 is a member coupled to the piston 204, and is a member passing through the first chamber 201 and penetrating a closed end of the main tube 200. Furthermore, the main shaft 207 passes through the second chamber 202 from the piston 204 and penetrates the closed end of the main tube 200. Therefore, the main shaft 207 is configured to protrude from both ends of the main tube 200. One end of the main shaft 207 is connected to a clevis 68 provided on a vehicle body frame 60. That is, the main shaft 207 has a rod end 220 and a pin 221 that are similar to those in the second embodiment.

The sub tube 210 has a third chamber 213 and a fourth chamber 214 for holding hydraulic oil. The third chamber 213 and the fourth chamber 214 are continuous via an electromagnetic valve 230. The electromagnetic valve 230 has a solenoid 231 and a wall portion 217. The wall portion 217 is provided for the purpose of narrowing an inner diameter of the sub tube 210. The wall portion 217 has a cylindrical shape as a whole, and the hydraulic oil can flow back and forth through a hollow inside the wall portion 217.

The solenoid 231 has a valve body 231a capable of closing the hollow in the wall portion 217, and has a configuration capable of adjusting back-and-forth flows of the hydraulic oil by the valve body 231a protruding and retracting with respect to the hollow of the wall portion 217. A restriction control unit 83 controls speed at which the restriction control unit 83 controls the solenoid 231 to cause the valve body 231a to protrude and retract. The solenoid 231 operates about 10 times per second.

Internal spaces of the main tube 200 and the sub tube 210 communicate with each other at two points. That is, a first passage 215 that communicates the first chamber 201 and the third chamber 213 is provided between the main tube 200 and the sub tube 210. Furthermore, a second passage 216 that communicates the second chamber 202 and the fourth chamber 214 is provided between the main tube 200 and the sub tube 210.

### 13. Operation of steering damper

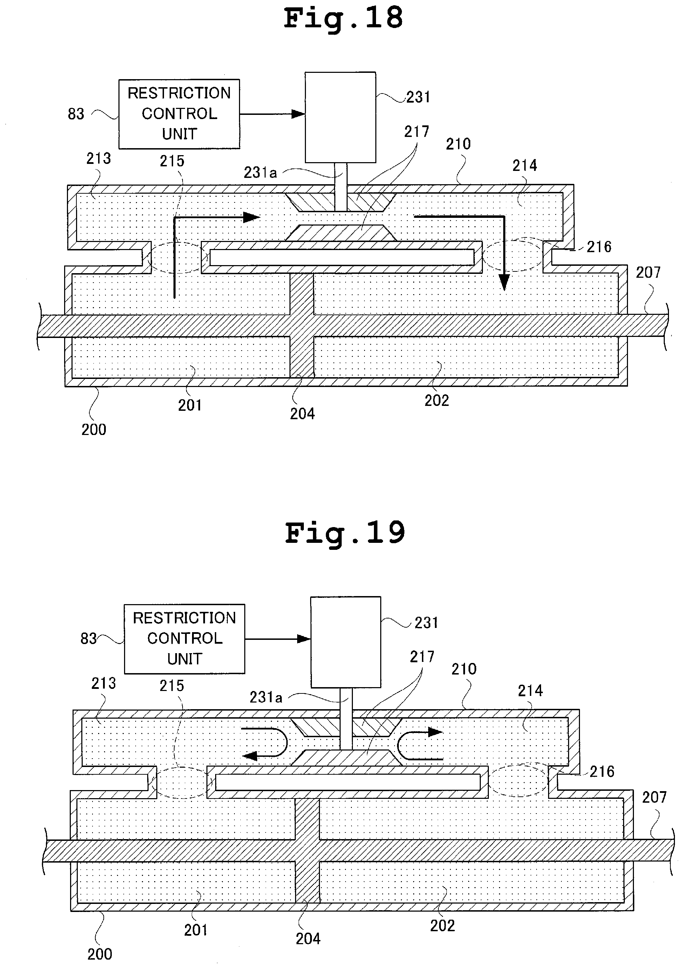

FIG. 18 is a schematic view for describing operation of the steering damper 73 according to the third embodiment. As illustrated in FIG. 18, when the valve body 231a is opened, hydraulic oil in the first chamber 201 passes through the first passage 215 and the third chamber 213, passes through the electromagnetic valve 230, passes through the fourth chamber 214 and the second passage 216, and then reaches the second chamber 202. Furthermore, the hydraulic oil in the second chamber 202 passes through the second passage 216 and the fourth chamber 214, passes through the electromagnetic valve 230, passes through the third chamber 213 and the first passage 215, and then reaches the first chamber 201. That is, the hydraulic oil in the first chamber 201 and the hydraulic oil in the second chamber 202 can indirectly flow back and forth. Then, the first chamber 201 contracts, and the second chamber 202 expands. The piston 204 operates toward the first chamber 201. Accordingly, the main shaft 207 is actuated. When the electromagnetic valve 230 operates frequently, the valve body 231a is opened.

FIG. 19 is a schematic view for describing operation of the steering damper 73 according to the third embodiment. As illustrated in FIG. 19, when the valve body 231a is closed, the hydraulic oil in the first chamber 201 cannot pass through the electromagnetic valve 230. Similarly, the hydraulic oil in the second chamber 202 cannot pass through the electromagnetic valve 230. That is, the hydraulic oil in the first chamber 201 and the second chamber 202 cannot flow back and forth. Then, the piston 204 and the main shaft 207 are not actuated. When the electromagnetic valve 230 operates infrequently, the valve body 231a is closed.

In this manner, the restriction control unit 83 operates the electromagnetic valve 230 to control whether or not to actuate the main shaft 207. In practice, the electromagnetic valve 230 operates about 10 times per second, and a mode of actuation of the main shaft 207 is changed by changing the number of times of the operations.

Operation of the steering damper 73 can be described with reference to the flowchart described with reference to FIG. 9. Hereinafter, the flowchart will be described in order.

Step S11: First, the engine 5 of the two-wheel motor vehicle 1 is started by the driver. Then, the restriction control unit 83 is also activated to start control operation. Then, the processing proceeds to Step S12.

Step S12: When activated, the restriction control unit 83 starts to control the electromagnetic valve 230 under control for low-speed traveling. Then, the electromagnetic valve 230 operates frequently, and the piston 204 easily moves. Therefore, in this case, quick steering by the driver is allowed. The control for low-speed traveling is continued when the two-wheel motor vehicle 1 starts traveling.

Step S13: The restriction control unit 83 judges whether or not the engine 5 has stopped. If the judgement is true, the processing ends. If the judgement is false, the processing proceeds to Step S14.

Step S14: The restriction control unit 83 judges whether or not the vehicle speed is 40 km/h or more. If the judgement is true, the processing proceeds to Step S15. If the judgement is false, the processing returns to Step S12.

Step S15: The restriction control unit 83 starts to control the electromagnetic valve 230 under control for high-speed traveling. Then, the electromagnetic valve 230 operates less frequently, and the piston 204 is less likely to move. Therefore, in this case, quick steering by the driver is restricted. Similarly, a sudden change in the steering angle of the front wheel 3 due to a disturbance is also restricted. Then, the processing proceeds to Step S16.

Step S16: The restriction control unit 83 judges whether or not the vehicle speed is less than 40 km/h. If the judgement is true, the processing returns to Step S12, and the control for low-speed traveling is started again. If the judgement is false, the processing returns to Step S16.

### 14. Modifications

The present invention is not limited to the above-described embodiments, and modifications can be made as follows.

### <Modification 1>

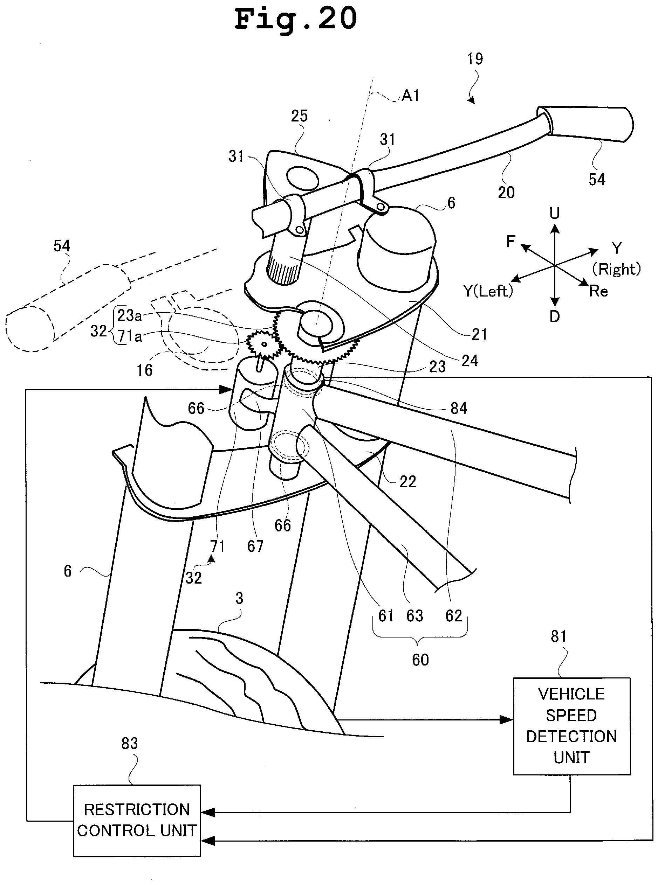

In the above-described embodiment, the change in the steering angle of the front wheel 3 is detected by the steering angular velocity detection unit 82, but the present invention is not limited to this configuration. As illustrated in FIG. 20, the change in the steering angle may be detected by an acceleration sensor 84 instead of the steering angular velocity detection unit 82. The acceleration sensor 84 is a sensor that detects acceleration of the steering angle of the front wheel 3, and corresponds to a first detection unit of the present invention. The predetermined value in this case is greater than an upper limit value of the acceleration of the steering angle of the front wheel 3 with the self-steering when the two-wheel motor vehicle 1 turns on a curve. When a mean value of the acceleration of the steering angle of the front wheel 3 during the predetermined period is equal to or greater than the predetermined value, the restriction control unit 83 determines that the detected value is greater than the predetermined value. The predetermined period is 0.1 seconds or less, or 0.2 seconds or less.

### <Modification 2>

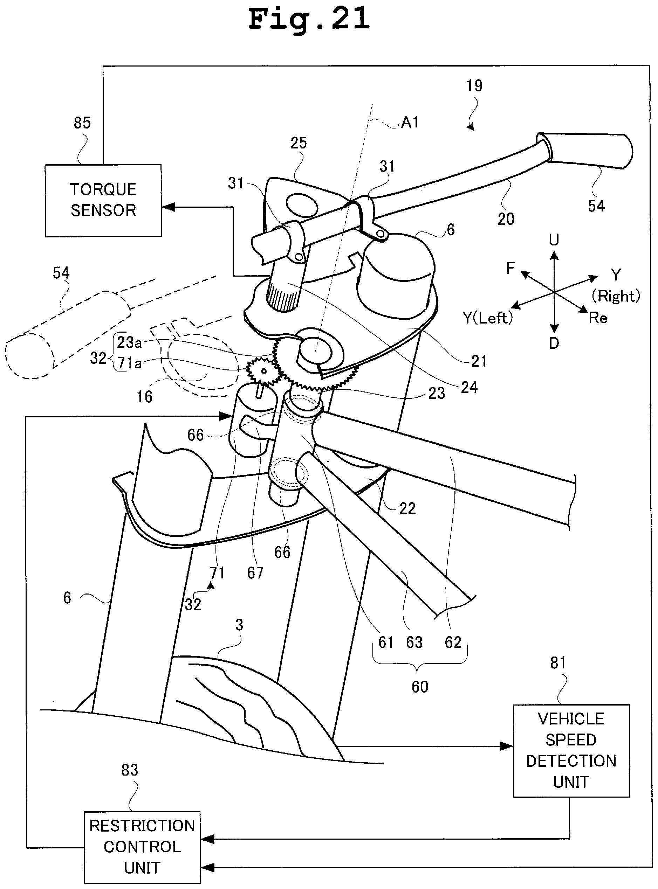

In the above-described embodiment, the change in the steering angle of the front wheel 3 is detected by the steering angular velocity detection unit 82, but the present invention is not limited to this configuration. As illustrated in FIG. 21, the change in the steering angle may be detected by a torque sensor 85 that detects steering torque applied to the handlebar stem 24. The handlebar stem 24 corresponds to a shaft member of the present invention. The torque sensor 85 is a sensor that detects steering torque of the front wheel 3. The torque sensor 85 is a magnetostrictive sensor that detects twist of the steering device 19, and corresponds to a first detection unit of the present invention. According to the configuration of the present modification, the steering device 19 includes the front forks 6, the handlebar stem 24, and the handlebar 20, and the torque sensor 85 detects torque around the handlebar stem 24, the torque being applied to the handlebar stem 24. Furthermore, the predetermined value in this case is greater than an upper limit value of the steering torque of the front wheel 3 with the self-steering when the two-wheel motor vehicle 1 turns on a curve. When a mean value of the steering torque of the front wheel 3 during a predetermined period is equal to or greater than the predetermined value, the restriction control unit 83 determines that a detected value is greater than the predetermined value. The predetermined period is 0.1 seconds or less, or 0.2 seconds or less. With this configuration, a change in a relative position between the front forks 6 and the handlebar 20 can be reliably detected by twist of the handlebar stem 24, and a torque input to the steering device 19 can be reliably detected.

### <Modification 3>

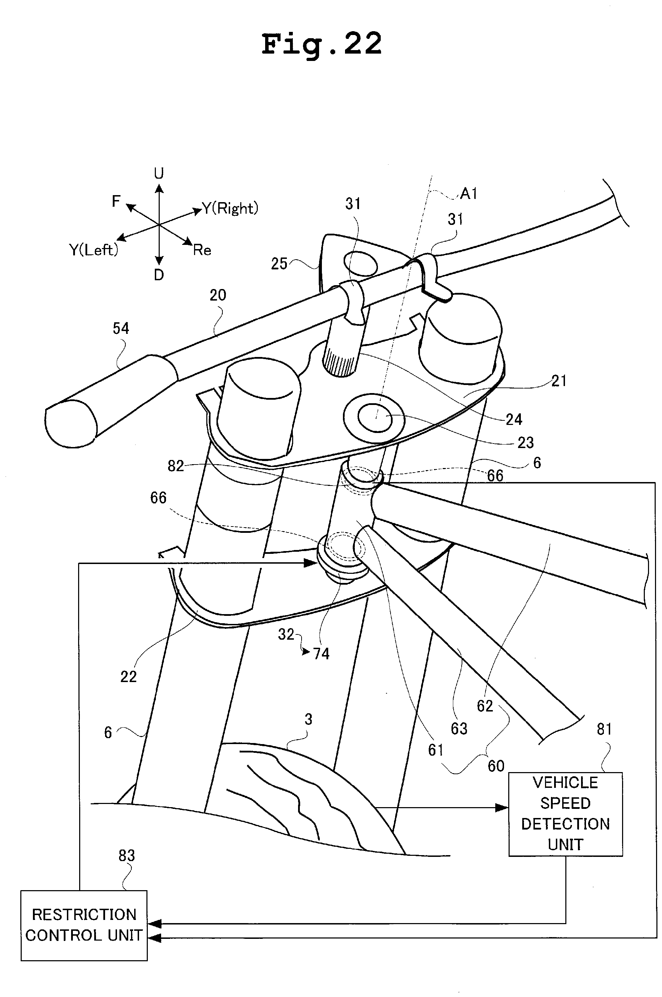

The restriction device 32 includes the motor 71 in the first embodiment described above, but the present invention is not limited to this configuration. As illustrated in FIG. 22, a drum brake 74 may be provided as the restriction device 32. The drum brake 74 is provided in the head pipe 61, and can brake rotation of the stem shaft 23 passing through a hollow of the head pipe 61. The restriction control unit 83 restricts the change in the steering angle of the front wheel 3 by operating the drum brake 74 as necessary.

### <Modification 4>

In addition to the above-described configuration, when the two-wheel motor vehicle 1 travels straight and the value detected by the steering angular velocity detection unit 82 is equal to or greater than the predetermined value, the restriction control unit 83 may cause the restriction device 32 to allow the change in the steering angle of the front wheel 3. Furthermore, when the two-wheel motor vehicle 1 is turning on a curve and the value detected by the steering angular velocity detection unit 82 is equal to or greater than the predetermined value, the restriction control unit 83 may cause the restriction device 32 to restrict the change in the steering angle of the front wheel 3. Whether the two-wheel motor vehicle 1 is traveling straight or turning on a curve can be judged on the basis of an output from the gyro sensor 70 supported by the vehicle body frame 60.

### <Modification 5>

The present invention relates to the two-wheel motor vehicle 1, but the present invention is not limited to this configuration. The present invention can also be applied to other straddled vehicles. For example, there is one rear wheel 4. The number of the rear wheel 4 is not limited thereto. There may be two rear wheel 4.

## Claims

1. A straddled vehicle (1) comprising:
a vehicle body frame (60);
a steering device (19) rotatably supported by the vehicle body frame (60);
a front wheel (3) that is steered by the steering device (19) and changes a steering angle of the steering device (19);
a first detection unit (82, 85) that detects at least any one of steering angular velocity of the front wheel (3), acceleration of a steering angle of the front wheel (3), and steering torque of the front wheel (3);
a restriction unit (32) that is able to restrict a change in the steering angle of the front wheel (3); and
a control unit (83) that causes the restriction unit (32) to restrict a change in the steering angle of the front wheel (3) when a value detected by the first detection unit (82, 85) is equal to or greater than a predetermined value.

2. The straddled vehicle according to claim 1, wherein
when the value detected by the first detection unit (82, 85) is smaller than the predetermined value, the control unit (83) causes the restriction unit (32) to allow a change in the steering angle of the front wheel (3).

3. The straddled vehicle according to claim 1, wherein
the control unit (83) causes the restriction unit (32) to allow a change in the steering angle of the front wheel (3) when the straddled vehicle (1) is traveling straight, and the value detected by the first detection unit (82, 85) is equal to or greater than the predetermined value, and
the control unit (83) causes the restriction unit (32) to restrict a change in the steering angle of the front wheel (3) when the straddled vehicle (1) is turning on a curve, and the value detected by the first detection unit (82, 85) is equal to or greater than the predetermined value.

4. The straddled vehicle according to claim 1, further comprising a speed detection unit (81) that detects speed of the straddled vehicle, wherein
the control unit (83) causes the restriction unit (32) to restrict a change in the steering angle of the front wheel (3) when the speed detected by the speed detection unit (81) is high, and the value detected by the first detection unit (82, 85) is equal to or greater than the predetermined value, and
the control unit (83) causes the restriction unit (32) to allow a change in the steering angle of the front wheel (3) when the speed detected by the speed detection unit (81) is low, and the value detected by the first detection unit (82, 85) is equal to or greater than the predetermined value.

5. The straddled vehicle according to claim 4, wherein
the control unit (83) operates on assumption that speed of the straddled vehicle (1) is high when the speed is 40 km/h.

6. The straddled vehicle according to claim 1, wherein
the predetermined value is greater than an upper limit value of steering angular velocity of the front wheel (3) with self-steering when the straddled vehicle (1) turns on a curve,
the predetermined value is greater than an upper limit value of acceleration of a steering angle of the front wheel (3) with self-steering when the straddled vehicle (1) turns on a curve, or
the predetermined value is greater than an upper limit value of steering torque of the front wheel (3) with self-steering when the straddled vehicle (1) turns on a curve.

7. The straddled vehicle according to claim 1, wherein
the control unit (83) determines that the detected value is greater than the predetermined value when a mean value of steering angular velocity of the front wheel (3) during a predetermined period is equal to or greater than the predetermined value, when a mean value of acceleration of a steering angle of the front wheel (3) during a predetermined period is equal to or greater than the predetermined value, or when a mean value of steering torque of the front wheel (3) during a predetermined period is equal to or greater than the predetermined value, and
the predetermined period is 0.2 seconds or less.

8. The straddled vehicle according to claim 1, wherein
the first detection unit (82, 85) detects rotation of the steering device (19) with respect to the vehicle body frame (60).

9. The straddled vehicle according to claim 1, wherein
the first detection unit (82, 85) is a torque sensor that detects twist of the steering device (19).

10. The straddled vehicle according to claim 9, wherein
the steering device (19) includes
front forks (6) that support a front wheel (3),
a shaft member (24) coupled to the front forks (6),
a handlebar (20) coupled to the shaft member (24), and
the torque sensor detects torque around the shaft member (24), the torque being applied to the shaft member (24).

11. The straddled vehicle according to claim 1, wherein
the restriction unit (32) restricts rotation of the steering device (19) with respect to the vehicle body frame (60).

12. The straddled vehicle according to claim 1, wherein
the restriction unit (32) includes
a braking mechanism that applies braking force for braking rotation of a steering device (19) with respect to the vehicle body frame (60).

13. The straddled vehicle according to claim 12, wherein
the braking mechanism includes
an actuator that generates braking force, and
a transmission mechanism that transmits the braking force from the actuator to a steering device (19).

14. The straddled vehicle according to claim 1, wherein
the restriction unit (32) is a steering damper (72) that resists rotation of a steering device (19) with respect to a vehicle body frame (60), and
the steering damper (71) includes
a cylinder tube (100),
a piston (104) that moves by hydraulic pressure in the cylinder tube (100),
a main shaft (106) integrated with the piston (104), in which at least a tip end of the main shaft (106) protrudes from one end of the cylinder tube (100), and
a damping force adjustment unit (130) that is able to, according to control by the control unit (83), adjust hydraulic pressure experienced by the piston (104).

15. The straddled vehicle according to claim 14, wherein
the piston (104) is installed inside the cylinder tube (100),
the cylinder tube (100) includes a first chamber and a second chamber partitioned by the piston (104),
the first chamber (101) stores hydraulic oil,
the second chamber (102) stores hydraulic oil,
the steering damper (71) has a first path that communicates the first chamber (101) and the second chamber (102),
the damping force adjustment unit (130) opens and closes the first path,
the damping force adjustment unit (130) closes the first path when the restriction unit (32) restricts a change in the steering angle of the front wheel (3), and
the damping force adjustment unit (130) opens the first path when the restriction unit (32) allows a change in the steering angle of the front wheel (3).
